# EUROPÄISCHE PATENTSCHRIFT

(11) **EP 0 803 649 B1**
(45) Veröffentlichungstag und Bekanntmachung des Hinweises auf die Patenterteilung: **07.03.2001**
(21) Anmeldenummer: 97105015.8
(22) Anmeldetag: 25.03.1997
(51) Int. Cl.: F02M 69/54, G05D 16/06

(54) **Druckregelventil**
Pressure control valve
Vanne de régulation de pression

(30) Priorität: 25.04.1996 DE 19616512
(43) Veröffentlichungstag der Anmeldung: 29.10.1997
(73) Patentinhaber: EFFBE-WERK FRITZ BRUMME GmbH, 65479 Raunheim (DE)
(72) Erfinder: Schiffer, Walter, 65835 Liederbach am Taunus (DE); Schrepfer, Jürgen, 65510 Hünstetten (DE)
(74) Vertreter: Weber-Bruls, Dorothée, Dr.

(56) Entgegenhaltungen:
- EP-A- 0 198 381
- EP-A- 0 518 207
- GB-A- 2 004 032
- US-A- 4 664 142
- US-A- 4 741 360
- PATENT ABSTRACTS OF JAPAN vol. 13, no. 392 (M-865), 30.August 1989 & JP 01 138368 A (AISIN SEIKI CO LTD), 31.Mai 1989,

## Beschreibung

Die Erfindung bezieht sich auf ein Druckventil mit einem Ventilgehäuse, das einen Ventilsitz; eine Ventilverschlußplatte; eine im Ventilgehäuse befestigte, einen Einlaßraum und einen Niederdruckraum im Ventilgehäuse begrenzende Membran aus gummielastischem Material; einen Membranteller, über den die Membran an der Ventilverschlußplatte festgeklemmt ist; eine Druckfeder, deren Druck einerseits auf den Membranteller und andererseits auf eine den Niederdruckraum begrenzende Stirnwand des Ventilgehäuses wirkt; eine in der Mitte der Ventilverschlußplatte senkrecht zu dieser befestigte Führungsstange; eine gehäusefeste Führungseinrichtung, in der die Führungsstange axial geführt ist; eine zwischen der Ventilverschlußplatte und dem Ventilsitz angeordnete Dichtscheibe aus gummielastischem Material und einen an der Gehäusewand des Niederdruckraums ausgebildeten Rohrstutzen aufweist, wobei die Druckfederkraft durch axiales Eindrücken der Stirnwand eingestellt ist.

Ein derartiges Druckventil kann beispielsweise als Druckregler für den Druck des Kraftstoffs eines Verbrennungsmotors in der Kraftstoffzuleitung dienen und zu diesem Zweck in einer von der Kraftstoffzuleitung zum Tank führenden Abzweigleitung angeordnet sein, wobei das Ventil bei zu hohem Druck in der Kraftstoffzuleitung öffnet und den Druck zum Tank hin abbaut. Gleichzeitig kann über den am Niederdruckraum angeschlossenen Rohrstutzen eine Verbindung zur Saugseite des Verbrennungsmotors oder zur Atmosphäre bestehen, um das Öffnen oder Schließen des Ventils durch den Saugdruck oder Atmosphärendruck zu steuern.

Ein solches Druckventil ist beispielsweise dem deutschen Patent 41 19 431 zu entnehmen.

Bei diesem bekannten Druckventil ist die Führungsstange einerseits in einer koaxialen Bohrung der Ventilverschlußplatte im Preßsitz befestigt und andererseits durch ein mittleres Führungsloch eines Führungstellers hindurchgeführt. Die Führungsstange soll sicherstellen, daß die Dichtscheibe beim Öffnen und Schließen des Ventils planparallel zum Ventilsitz bewegt wird, um den Öffnungs- und Schließdruck genau zu reproduzieren und den gewünschten Sollwert des Drucks möglichst genau einzuhalten. Mitunter ergeben sich jedoch fertigungsbedingte Abweichungen von den Nennmaßen der Führungsstange und der sie im Preßsitz aufnehmenden Bohrung in der Ventilverschlußplatte, so daß eine planparallele Verstellung der Dichtscheibe relativ zur Ventilsitzfläche nicht in allen Fällen mit hinreichender Genauigkeit gewährleistet ist. Darüber hinaus ist die Ausbildung der axialen Bohrung in der Ventilverschlußplatte und die Montage der Führungsstange aufwendig. Das gleiche gilt für den Führungsteller.

Der Erfindung liegt die Aufgabe zugrunde, ein Druckventil der eingangs genannten Art anzugeben, dessen Herstellung und Montage einfacher ist und bei dem dennoch die gewünschte Kennlinie mit hoher Genauigkeit eingehalten wird.

Erfindungsgemäß ist diese Aufgabe dadurch gelöst, daß die Führungsstange einstückig mit der Ventilverschlußplatte ausgebildet ist, daß die Druckfeder unmittelbar an der Stirnwand anliegt und daß der Rohrstutzen an der Stirnwand ausgebildet ist und die Führungseinrichtung bildet.

Bei dieser Lösung entfällt die Ausbildung einer Bohrung in der Ventilverschlußplatte zur Aufnahme der Führungsstange und deren genaue Bemessung und ein Führungsteller, da dessen Funktion gleichzeitig von dem Rohrstutzen übernommen wird.

Vorzugsweise ist der Rohrstutzen einstückig mit der Stirnwand ausgebildet. Es entfällt daher die Ausbildung einer Verbindung zwischen dem Ventilgehäuse und dem Rohrstutzen.

Sodann kann dafür gesorgt sein, daß der Rohrstutzen auf seiten des Niederdruckraums eine sich nach außen bis angenähert auf den Durchmesser der Führungsstange konisch verjüngende Öffnung aufweist. Diese Öffnung erleichtert das Einführen der Führungsstange in den Rohrstutzen.

Günstig ist es ferner, wenn die Führungsstange als Rohr ausgebildet ist, das die dem Ventilsitz zugekehrte Seite der Ventilverschlußplatte mit dem Rohrstutzen verbindet. Bei dieser Ausbildung entfällt ein separater Anschlußstutzen für die Verbindung der Ausgangsseite des Ventils mit dem Tank, wenn der Kraftstoffdruck nicht in Abhängigkeit vom Saugdruck des Verbrennungsmotors geregelt werden soll.

Sodann kann dafür gesorgt sein, daß die Dichtscheibe auf ihrer dem Zwischenraum zwischen Ventilverschlußplatte und Ventilsitz zugekehrten Seite eine axial vorstehende Dichtlippe aufweist, die eine Austrittsöffnung des Ventils begrenzt. Diese Dichtlippe stellt einen dichten Verschluß des Ventils im geschlossenen Zustand sicher. Zwar kann sie auch bei ebener Ausbildung der Dichtfläche der Dichtscheibe in der der Dichtscheibe zugekehrten Fläche von Ventilverschlußplatte oder Ventilsitz ausgebildet sein. Doch ist die Ausbildung der Dichtlippe in der Dichtscheibe selbst einfacher.

Vorzugsweise ist die Dichtscheibe an der einen der beiden einander zugekehrten Flächen von Ventilverschlußplatte und Gehäuseboden anvulkanisiert. Hierbei wird die Dichtscheibe beim Verbinden mit der betreffenden Fläche gleichzeitig in die gewünschte Form gebracht, so daß ein zusätzlicher Arbeitsgang, insbesondere eine gegebenenfalls erforderliche Planbearbeitung der Dichtfläche der Dichtscheibe, entfällt.

Die Erfindung und ihre Weiterbildungen werden nachstehend anhand der Zeichnung bevorzugter Ausführungsbeispiele näher beschrieben. Es zeigen:
- Fig. 1: einen Axialschnitt durch ein erfindungsgemäßes Druckventil,
- Fig. 2: ein Blockschaltbild eines Anwendungsbeispiels des Druckventils nach Fig. 1,
- Fig. 3, 4 u. 5: Ausschnitte der Fig. 1 mit verschiedenen Abwandlungen des Druckventils nach Fig. 1,
- Fig. 6: einen Axialschnitt einer weiteren Ausführungsform eines erfindungsgemäßen Druckventils,
- Fig. 7: ein Blockschaltbild eines Anwendungsbeispiels des Druckventils nach Fig. 6 und
- Fig. 8, 9 u. 10: Ausschnitte der Fig. 6 mit verschiedenen Abwandlungen des Druckventils nach Fig. 6.

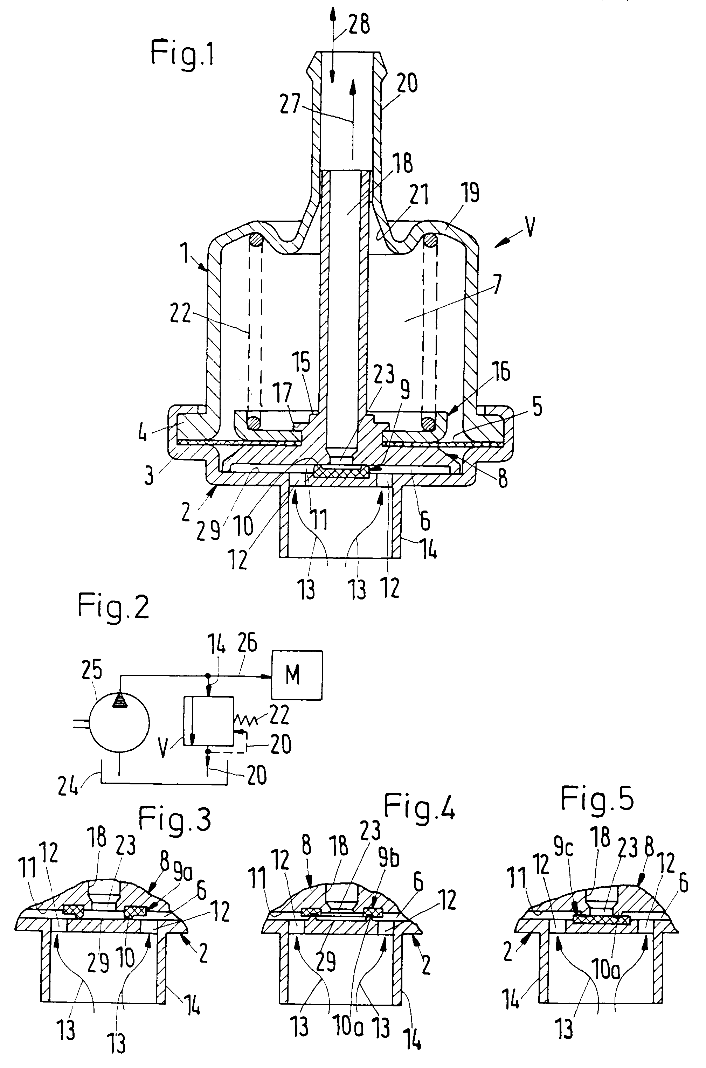

Das Druckventil V nach Fig. 1 hat ein zweiteiliges Ventilgehäuse aus Metall, bestehend aus einem Gehäuseoberteil 1 und einem Gehäuseunterteil 2, die dadurch miteinander verbunden sind, daß ein Flansch 3 des Gehäuseunterteils 2 um einen Flansch 4 des Gehäuseoberteils 1 herumgebörtelt ist.

Zwischen den beiden Flanschen 3 und 4 ist eine gummielastische Membran 5 aus einem Fluor-Elastomer oder einem Nitrilbutadien-Elastomer mit einem Verstärkungsgewebe aus Polyimid oder Polyamid und einer Härte von etwa 70 Shore eingespannt. Die Membran 5 unterteilt das Ventilgehäuse in einen Einlaßraum 6 und einen Niederdruckraum 7. Sie trägt eine Ventilverschlußplatte 8 aus Metall gegenüber einer Dichtscheibe 9 aus gummielastischem Material, vorzugsweise einem Fluor-Elastomer, mit einer Härte von etwa 60 bis 70 Shore und einer Dicke von etwa 1 mm. Die Dichtscheibe 9 hat eine umlaufende, ein etwa halbkreisförmiges Querschnittsprofil aufweisende weiche Dichtlippe 10, die mit einer harten planen Fläche 11 der Ventilverschlußplatte 8 zusammenwirkt. Die Dichtscheibe 9 ist in einer flachen kreiszylindrischen Vertiefung des Bodens des Gehäuseteils 2 unter Zwischenschaltung eines Haftvermittlers anvulkanisiert. Im Boden des Gehäuseunterteils 2 sind ferner radial außerhalb der Dichtscheibe 9 Eintrittsöffnungen 12 für ein Druckfluid vorgesehen, das durch Strömungspfeile 13 angedeutet ist. Die Einlaßöffnungen 12 liegen innerhalb eines außen am Boden des Gehäuseunterteils 2 angeformten Anschlußstutzens 14.

Auf ihrer dem durch die Dichtscheibe 9 und den Boden des Gehäuseunterteils 2 gebildeten Ventilsitz abgewandten Seite hat die Ventilverschlußplatte 8 einen Vorsprung 15, der durch miteinander fluchtende mittlere Löcher in der Membran 5 und einem Membranteller 16 aus Metall hindurchgeführt ist, wobei die Membran 5 zwischen Ventilverschlußplatte 8 und Membranteller 16 liegt. Am Umfang des Vorsprungs 15 ist durch axiales Stauchen eines Randabschnitts der der Dichtscheibe 9 abgekehrten Stirnfläche des Vorsprungs 15 ein radial vorstehender Flansch 17 ausgebildet, der den Membranteller 16 und die Membran 5 zwischen sich und der Ventilverschlußplatte 8 festklemmt. Koaxial am Vorsprung 15, d.h. in der Mitte der Ventilverschlußplatte 8 ist senkrecht zu dieser eine hohle Führungsstange 18 einteilig mit der Ventilverschlußplatte 8 ausgebildet. Die Führungsstange 18 ist mit ihrem freien Endabschnitt in der Bohrung eines an der Stirnwand 19 des Gehäuseoberteils 1 einstückig mit diesem ausgebildeten Rohrstutzens 20 geführt. Der Rohrstutzen 20 hat auf seiten des Niederdruckraums 7 eine sich nach außen bis angenähert auf den Durchmesser der Führungsstange 18 konisch verjüngende Öffnung 21, die das Einführen der Führungsstange 18 in die Bohrung des Rohrstutzens 20 erleichtert.

Am Membranteller 16 einerseits und der Stirnwand 19 andererseits liegt eine Druckfeder 22 jeweils mit einem ihrer Enden unmittelbar an. Die Druckfeder 22 belastet über den Membranteller 16 die Ventilverschlußplatte 8 in Schließrichtung des Ventils. Ihre Vorspannung wird durch axiales Eindrücken der Stirnwand 19 eingestellt. Hierdurch entfallen zusätzliche Einstellmittel, wie Stellschraube und Sicherungseinrichtung für diese, um die Federkraft einzustellen.

Die als Rohr ausgebildete Führungsstange 18 verbindet die dem Ventilsitz zugekehrte Seite der Ventilverschlußplatte 8 mithin mit dem Rohrstutzen 20. Hierbei ist die eine Meßblende bildende innere Öffnung 23 der Führungsstange 18 von der Dichtlippe 10 der Dichtscheibe 9 umgeben.

Fig. 2 stellt ein Blockschaltbild eines Anwendungsbeispiels des in Fig. 1 dargestellten Druckventils V dar. Aus einem Tank 24 wird durch eine Pumpe 25 ein brennbares Fluid, z.B. Benzin, in die Einspritzleitung 26 eines mit Einspritzung arbeitenden Verbrennungsmotors M gepumpt. Der Anschlußstutzen 14 des Druckventils V ist mit der Einspritzleitung 26 und der Rohrstutzen 20 mit dem Tank 24 verbunden. Wenn der Druck des durch die Pumpe 25 geförderten Fluids im Einlaßraum 6 die eingestellte Kraft der Druckfeder 22, die Kraft der Membran 5 und den Druck der Flüssigkeitssäule, der im Tank 24 auf die Ausgangsseite des Druckventils V über den Rohrstutzen 20 und den engen Spalt zwischen der Führungsstange 18 und der Innenseite des Rohrstutzens 20 bis in den Niederdruckraum 7 zurückwirkt, überschreitet, wird die Ventilverschlußplatte 8 von der Dichtscheibe 9 abgehoben, so daß das Druckventil V öffnet und der Druck des Fluids in der Einspritzleitung 26 über das Druckventil V zum Tank 24 hin bis kurz unterhalb des Wertes, bei dem das Druckventil V geöffnet wurde, abgebaut wird. Hierbei stellt der ausgangsseitige Strömungspfeil 27 in Fig. 1 das in den Tank 24 zurückströmende Fluid und der ausgangsseitige Doppelpfeil 28 in Fig. 1 den in Abhängigkeit vom Atmosphärendruck und der Füllhöhe des Tanks 24 gegebenenfalls schwankenden Gegendruck dar.

Auf diese Weise wird der Druck in der Einspritzleitung 26 geregelt, wobei die Ventilverschlußplatte 8 aufgrund der Führung der Führungsstange 18 im Rohrstutzen 20 ihre parallele Lage relativ zur Dichtscheibe 9 über den gesamten Öffnungshub beibehält, ohne daß sich die Ventilcharakteristik aufgrund einer Verkantung der Ventilverschlußplatte 8 ändert. Da der Rohrstutzen 20 gleichzeitig die Führung der Führungsstange 18 übernimmt, entfällt ein bislang hierfür vorgesehener Führungsteller. Desgleichen kommt man aufgrund der hohlen Ausführung der Führungsstange 18 ohne zusätzlichen Auslaßrohrstutzen aus.

Das Druckventil nach Fig. 3 unterscheidet sich von dem nach Fig. 1 lediglich dadurch, daß die Dichtscheibe 9a als Ring ausgebildet und in einer Vertiefung der Fläche 11 der Ventilverschlußplatte 8 anvulkanisiert ist, so daß ihre Dichtlippe 10 dem in diesem Falle als Ventilsitz dienenden Boden des Gehäuseunterteils 2 zugekehrt ist. Die der Dichtscheibe 9a zugekehrte Fläche 29 des Bodens des Gehäuseunterteils 2 ist in diesem Falle eben und hart ausgebildet.

Das Ausführungsbeispiel nach Fig. 4 unterscheidet sich von dem nach Fig. 3 lediglich dadurch, daß die ringförmige Dichtscheibe 9b auf beiden Seiten eben und anstelle ihrer Dichtlippe die der Dichtscheibe 9b zugekehrte Fläche 29 des Bodens des Gehäuseunterteils 2 mit einer umlaufenden ringförmigen Dichtlippe 10a versehen ist, die mit der Dichtscheibe 9b zusammenwirkt.

Die Abwandlung nach Fig. 5 unterscheidet sich von der nach Fig. 1 lediglich dadurch, daß die Dichtscheibe 9c wiederum auf beiden Seiten eben und statt ihrer Dichtlippe die ihr zugekehrte Fläche 11 der Ventilverschlußplatte 8 mit der ringförmigen Dichtlippe 10a versehen ist.

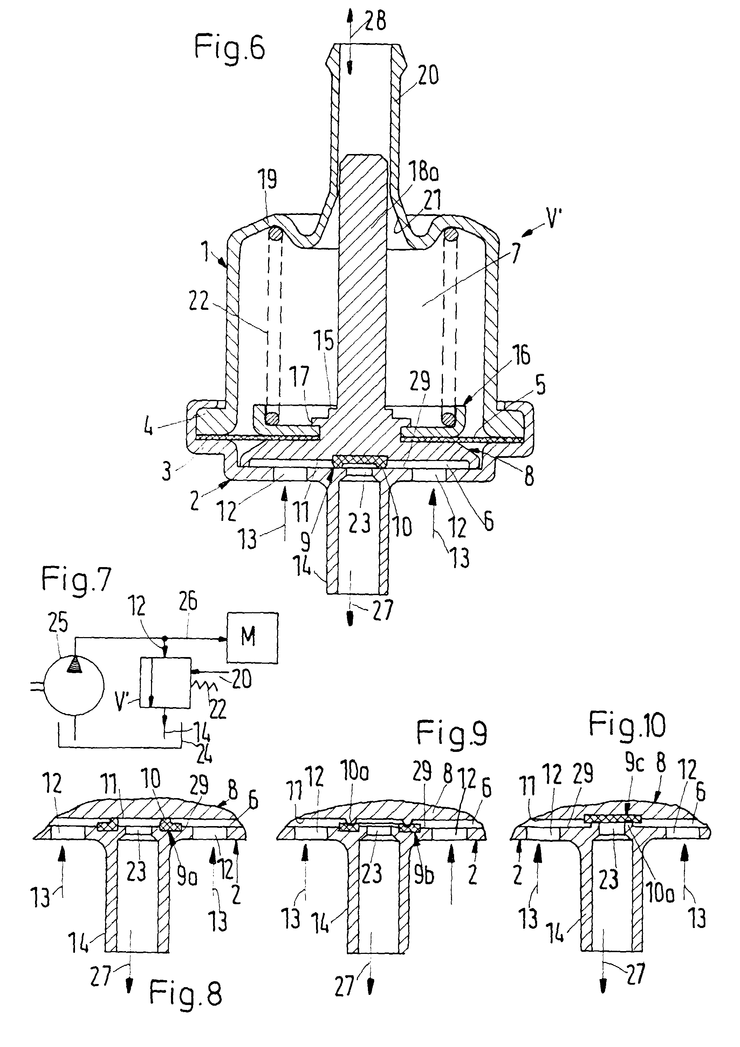

Das Druckventil V' nach Fig. 6 unterscheidet sich von dem nach Fig. 1 folgendermaßen: Die Führungsstange 18a ist massiv ausgebildet und die Dichtscheibe 9 in einer zylindrischen Vertiefung der Fläche 11 der Ventilverschlußplatte 8 angeordnet oder anvulkanisiert. Die Fläche 29 des Bodens des Gehäuseunterteils 2 ist als Ventilsitz eben und hart ausgebildet. Die als Meßblende wirkende Austrittsöffnung 23 ist im inneren Ende des Anschlußstutzens 14 ausgebildet. Die Einlaßöffnungen 12 liegen radial außerhalb des Anschlußstutzens 14.

Fig. 7 stellt ein Blockschaltbild eines Anwendungsbeispiels des Druckventils V' nach Fig. 6 dar. In diesem Falle ist der Rohrstutzen 20 nicht mit dem Tank 24, sondern mit der nicht dargestellten Saugrohrleitung eines Verbrennungsmotors oder der Atmosphäre und der Anschlußstutzen 14 mit dem Tank 24 verbunden. Ferner sind die Einlaßöffnungen 12 mit der Druckseite der Pumpe 25 bzw. der Einspritzleitung 26 verbunden. Wenn daher der Druck der Pumpe 25 die Kraft der Feder 22 und der Membran 5 sowie den über den Spalt zwischen der Führungsstange 18a und der Innenseite des Rohrstutzens 20 auf die Membran 5 wirkenden Druck überschreitet, wird die Ventilverschlußplatte 8 zusammen mit der Dichtscheibe 9 von der als Ventilsitz wirkenden Fläche 29 abgehoben, so daß der in der Verbindungsleitung zwischen der Pumpe 25 und dem (nicht dargestellten) Einspritzventil am Motor M herrschende Druck über die Einlaßöffnungen 12, die Öffnung 23 und den Anschlußstutzen 14 zum Tank 24 hin bis zum Schließen des Ventils V' abgebaut wird, wobei die Öffnungsweite des Ventils V' durch den im Rohrstutzen 20 herrschenden Druck mitbestimmt wird. Auf diese Weise wird ebenfalls der Einspritzdruck des Motors M geregelt.

Das Ausführungsbeispiel nach Fig. 8 unterscheidet sich von dem nach Fig. 6 lediglich dadurch, daß die Dichtscheibe 9a umgekehrt, d.h. in einer Vertiefung der Fläche 29 anvulkanisiert, ringförmig ausgebildet und ihre die Ausgangsöffnung 23 umgebende Dichtlippe 10 der wiederum hart und eben ausgebildeten Fläche 11 der Ventilverschlußplatte 8 zugekehrt ist.

Das Ausführungsbeispiel nach Fig. 9 unterscheidet sich von dem nach Fig. 8 lediglich dadurch, daß die ringförmige Dichtscheibe 9b eben, d.h. ohne Dichtlippe, ausgebildet und stattdessen die ihr zugekehrte Fläche 11 der Ventilverschlußplatte 8 mit der Dichtlippe 10a versehen ist.

Das Ausführungsbeispiel nach Fig. 10 unterscheidet sich von dem nach Fig. 6 lediglich dadurch, daß die Dichtscheibe 9c auf beiden Seiten eben ausgebildet und die ihr zugekehrte Fläche 29 des Bodens des Gehäuseunterteils 2 mit einer die Ausgangsöffnung 23 umgebenden Dichtlippe 10a versehen ist.

Die Ventilverschlußplatte 8 stützt sich bei allen Ausführungsbeispielen über einen axialen Vorsprung, der an ihrem Rand umlaufend ausgebildet ist, am ihr gegenüberliegenden Boden des Gehäuses ab. Dieser Vorsprung verhindert, daß die Dichtlippe 10, 10a vollständig axial in die Dichtscheibe 9, 9a-9c gedrückt wird. Die Dichtlippe 10, 10a bewirkt daher stets allein auf seiten und in Verbindung mit der ihr gegenüberliegenden Fläche die Abdichtung des geschlossenen Ventils V, V'.

Obwohl die Anordnung und Ausbildung der Dichtscheiben 9b und 9c nach den Fig. 4 und 5 sowie 9 und 10 mögliche Varianten darstellen, wird die Ausbildung und Anordnung der mit der Dichtlippe 10 versehenen Dichtscheiben 9 und 9a nach den Fig. 1, 3, 6 und 8 bevorzugt, weil in diesem Fall die Dichtlippen 10 gleichzeitig mit der Dichtscheibe beim Anvulkanisieren ausgebildet werden.

## Patentansprüche

1. Druckventil (V; V') mit einem Ventilgehäuse (1, 2), das einen Ventilsitz (29); eine Ventilverschlußplatte (8); eine im Ventilgehäuse (1, 2) befestigte, einen Einlaßraum (6) und einen Niederdruckraum (7) im Ventilgehäuse begrenzende Membran (5) aus gummielastischem Material; einen Membranteller (16), über den die Membran (5) an der Ventilverschlußplatte (8) festgeklemmt ist; eine Druckfeder (22), deren Druck einerseits auf den Membranteller (16) und andererseits auf eine den Niederdruckraum (7) begrenzende Stirnwand (19) des Ventilgehäuses (1, 2) wirkt; eine in der Mitte der Ventilverschlußplatte (8) senkrecht zu dieser befestigte Führungsstange (18, 18a); eine gehäusefeste Führungseinrichtung (20), in der die Führungsstange (18; 18a) axial geführt ist; eine zwischen der Ventilverschlußplatte (8) und dem Ventilsitz (29) angeordnete Dichtscheibe (9; 9a-9c) aus gummielastischem Material und einen an der Gehäusewand des Niederdruckraums (7) ausgebildeten Rohrstutzen (20) aufweist, wobei die Druckfederkraft durch axiales Eindrücken der Stirnwand (19) eingestellt ist, **dadurch gekennzeichnet**, daß die Führungsstange (18; 18a) einstückig mit der Ventilverschlußplatte (8) ausgebildet ist, daß die Druckfeder (22) unmittelbar an der Stirnwand (19) anliegt und daß der Rohrstutzen (20) an der Stirnwand (19) ausgebildet ist und die Führungseinrichtung bildet.

2. Druckventil nach Anspruch 1, **dadurch gekennzeichnet**, daß der Rohrstutzen (20) einstückig mit der Stirnwand (19) ausgebildet ist.

3. Druckventil nach Anspruch 1 oder 2, **dadurch gekennzeichnet**, daß der Rohrstutzen (20) auf seiten des Niederdruckraums (7) eine sich nach außen bis angenähert auf den Durchmesser der Führungsstange (18; 18a) konisch verjüngende Öffnung (21) aufweist.

4. Druckventil nach einem der Ansprüche 1 bis 3, **dadurch gekennzeichnet**, daß die Führungsstange (18) als Rohr ausgebildet ist, das die dem Ventilsitz (29) zugekehrte Seite der Ventilverschlußplatte (8) mit dem Rohrstutzen (20) verbindet.

5. Druckventil nach einem der Ansprüche 1 bis 4, **dadurch gekennzeichnet**, daß die Dichtscheibe (9) auf ihrer dem Zwischenraum (6) zwischen Ventilverschlußplatte (8) und Ventilsitz (29) zugekehrten Seite eine axial vorstehende Dichtlippe (10) aufweist, die eine Austrittsöffnung (23) des Ventils begrenzt.

6. Druckventil nach einem der Ansprüche 1 bis 5, **dadurch gekennzeichnet**, daß die Dichtscheibe (9; 9a-9c) an der einen der beiden einander zugekehrten Flächen (11, 29) von Ventilverschlußplatte (8) und Gehäuseboden anvulkanisiert ist.

## Claims

1. Pressure valve (V; V') with a valve housing (1, 2), comprising a valve seat (29); a valve closing plate (8); a diaphragm made of flexible rubber material attached in the valve housing (1, 2) and limiting an inlet space (6), and a low pressure space (7) in the valve housing; a diaphragm disk (16) via which the diaphragm (5) is clamped to the valve closing plate (8); a pressure spring (22), the pressure of which acts on the one hand on the diaphragm disk (16) and on the other hand on an end wall (19) of the valve housing (1, 2) limiting the low pressure space (7); a guide rod (18, 18a) attached in the middle of the valve closing plate (8) and perpendicular to it; a guide device (20) fixed to the housing, in which the guide rod (18; 18a) is axially placed; a sealing disk (9; 9a-9c) made of flexible rubber material arranged between the valve closing plate (8) and the valve seat (29) and a connecting sleeve (20) constructed on the housing wall of the low pressure space (7), wherein the force of the pressure spring is adjusted by axially pressing in the end wall (19), characterised in that the guide rod (18; 18a) is constructed in one piece with the valve closing plate (8), the pressure spring (22) rests directly on the end wall (19) and the connecting sleeve (20) is constructed on the end wall (19) and constitutes the guide device.

2. Pressure valve according to Claim 1, characterised in that the connecting sleeve (20) is constructed in one piece with the end wall (19).

3. Pressure valve according to Claim 1 or 2, characterised in that the connecting sleeve (20) has an orifice (21) tapering conically outwards to approximately the diameter of the guide rod (18; 18a) on the side of the low pressure space (7).

4. Pressure valve according to one of Claims 1 to 3, characterised in that the guide rod (18) is constructed as a tube which connects the side of the valve closing plate (8) facing the valve seat (29) to the connecting sleeve (20).

5. Pressure valve according to one of Claims 1 to 4, characterised in that the sealing disk (9) has an axially projecting sealing lip (10) on its side facing the space (6) between valve closing plate (8) and valve seat (29), which limits an opening orifice (23) of the valve.

6. Pressure valve according to one of Claims 1 to 5, characterised in that the sealing disk (9; 9a-9c) is vulcanised to one of the two faces (11, 29) of valve closing plate (8) and floor of the housing facing one another.

## Revendications

1. Vanne de régulation de pression (V, V') dotée d'un boîtier de vanne (1, 2) qui présente un siège de vanne (29); une plaque (8) de fermeture de vanne; une membrane (5) en matériau de caoutchouc élastique, fixée dans le boîtier de vanne (1, 2) et délimitant une chambre d'admission (6) et une chambre à basse pression (7) dans le boîtier de vanne; un plateau de membrane (16) par l'intermédiaire duquel la membrane (5) est serrée contre la plaque (8) de fermeture de vanne ; un ressort de compression (22) dont la poussée agit d'une part sur le plateau de membrane (16) et d'autre part sur une paroi frontale (19) du boîtier de vanne (1, 2), qui délimite la chambre à basse pression (7); d'une tige de guidage (18, 18a) fixée au milieu de la plaque (8) de fermeture de vanne et perpendiculaire à cette dernière; un dispositif (20) de guidage fixé au boîtier, dans lequel la tige de guidage (18; 18a) est guidée axialement ; une plaque d'étanchéité (9; 9a à 9c) en un matériau de caoutchouc élastique, disposée entre la plaque (8) de fermeture de vanne et le siège de vanne (29), et un raccord tubulaire (20) réalisé sur la paroi du boîtier de la chambre à basse pression (7), la force élastique du ressort étant réglée par enfoncement axial de la paroi frontale (19), caractérisée en ce que la tige de guidage (18; 18a) est réalisée d'un seul tenant avec la plaque (8) de fermeture de la vanne, en ce que le ressort de compression (22) repose directement contre la paroi frontale (19) et en ce que le raccord tubulaire (20) est réalisé sur la paroi frontale (19) et forme le dispositif de guidage.

2. Vanne de régulation de pression selon la revendication 1, caractérisée en ce que le raccord tubulaire (20) est réalisé d'un seul tenant avec la paroi frontale (19).

3. Vanne de régulation de pression selon la revendication 1 ou 2, caractérisée en ce que le raccord tubulaire (20) présente sur le côté de la chambre à basse pression (7) une ouverture (21) qui se rétrécit coniquement en direction de l'extérieur, jusqu'à sensiblement le diamètre de la tige de guidage (18; 18a).

4. Vanne de régulation de pression selon l'une des revendications 1 à 3, caractérisée en ce que la tige de guidage (18) est configurée comme tube qui relie au raccord tubulaire (20) le côté de la plaque (8) de fermeture de la vanne qui est tourné vers le siège de vanne (29).

5. Vanne de régulation de pression selon l'une des revendications 1 à 4, caractérisée en ce que sur son côté tourné vers la chambre intermédiaire (6) située entre la plaque (8) de fermeture de la vanne et le siège de vanne (29), la plaque d'étanchéité (9) présente une lèvre d'étanchéité (10) qui en déborde axialement et qui délimite une ouverture de sortie (23) de la vanne.

6. Vanne de régulation de pression selon l'une des revendications 1 à 5, caractérisée en ce que la plaque d'étanchéité (9; 9a à 9c) est fixée par vulcanisation sur l'une des deux surfaces (11, 29) tournées l'une vers l'autre de la plaque (8) de fermeture de la vanne et du fond du boîtier.
